(19) Europäisches Patentamt / European Patent Office / Office européen des brevets

(11) **EP 2 990 867 A1**

(12) **DEMANDE DE BREVET EUROPEEN**

(43) Date de publication:
**02.03.2016 Bulletin 2016/09**

(51) Int Cl.:
***G03B 21/00*** (2006.01)

(21) Numéro de dépôt: **15179415.3**

(22) Date de dépôt: **31.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **25.08.2014 FR 1457966**

(71) Demandeur: **COMMISSARIAT A L'ENERGIE ATOMIQUE ET AUX ENERGIES ALTERNATIVES
75015 Paris (FR)**

(72) Inventeur: **ROSSINI, Umberto
38500 COUBLEVIE (FR)**

(74) Mandataire: **Thibon, Laurent
Cabinet Beaumont
1, rue Champollion
38000 Grenoble (FR)**

(54) **ÉCRAN ET DISPOSITIF D'AFFICHAGE EN RÉTROPROJECTION**

(57) L'invention concerne un écran d'affichage en rétroprojection, comportant : un diffuseur transmissif (501) ; une couche (503) de cristaux liquides disposée du côté de la face arrière du diffuseur (501) ; et du côté d'une première face de ladite couche (503), des premières et deuxièmes bandes conductrices parallèles alternées régulièrement réparties sur toute la surface de l'écran, les premières bandes étant interconnectées, et les deuxièmes bandes étant interconnectées et non connectées aux premières bandes.

Fig 6A

EP 2 990 867 A1

## Description

Domaine

La présente demande concerne un écran d'affichage en rétroprojection et un dispositif d'affichage en rétroprojection comportant un tel écran. Plus particulièrement, la présente demande concerne un écran et un dispositif d'affichage en rétroprojection susceptibles d'être intégrés dans un habitacle de véhicule.

Exposé de l'art antérieur

On appelle rétroprojection la projection d'images sur une face d'un écran transmissif, appelée ci-après par convention la face arrière de l'écran, pour la visualisation des images sur la face opposée de l'écran, appelée ci-après par convention la face avant de l'écran. On a déjà proposé d'utiliser des dispositifs d'affichage en rétroprojection pour fournir des informations dans des habitacles de véhicules, par exemple de voitures. De tels dispositifs peuvent par exemple être intégrés au niveau de la console centrale d'une voiture, ou encore au-dessus de cette console centrale. Cependant, des contraintes importantes existent sur des dispositifs d'affichage en rétroprojection intégrés dans des habitacles de véhicules. Ces dispositifs doivent notamment être relativement compacts, être assez directionnels pour éviter des projections lumineuses en direction d'éléments réfléchissants tels que le pare-brise, et assurer la production d'un flux lumineux et d'un contraste en sortie suffisants pour éviter des défauts de lisibilité lorsque le véhicule est placé sous un éclairement de luminosité importante, par exemple en provenance du soleil. En particulier, des problèmes peuvent se poser lorsque l'image projetée sur l'écran doit pouvoir être visualisée sous un angle différent de la normale à l'écran, par exemple lorsque l'écran est situé sur la console centrale d'une voiture et que l'image doit pouvoir être visualisée par le conducteur et/ou par un passager avant voisin du conducteur.

Il serait souhaitable de pouvoir disposer d'un écran d'affichage en rétroprojection et d'un dispositif d'affichage en rétroprojection palliant tout ou partie des inconvénients des écrans et dispositifs d'affichage en rétroprojection connus.

Résumé

Ainsi, un mode de réalisation prévoit un dispositif d'affichage en rétroprojection, comprenant un écran et une source lumineuse, dans lequel l'écran comporte : un diffuseur transmissif ; une couche de cristaux liquides disposée du côté de la face arrière du diffuseur ; et du côté d'une première face de ladite couche, des premières et deuxièmes bandes conductrices parallèles alternées régulièrement réparties sur toute la surface de l'écran, les premières bandes étant interconnectées, et les deuxièmes bandes étant interconnectées et non connectées aux premières bandes, et dans lequel la source lumineuse est adaptée à projeter une image sur l'arrière de l'écran.

Selon un mode de réalisation, les premières bandes conductrices et les deuxièmes bandes conductrices forment respectivement les dents de première et deuxième électrodes en forme de peignes imbriqués.

Selon un mode de réalisation, les dents des première et deuxième électrodes sont parallèles à la largeur de l'écran, et ont une longueur approximativement égale à la largeur de l'écran.

Selon un mode de réalisation, les dents des première et deuxième électrodes sont régulièrement réparties sur toute la longueur de l'écran.

Selon un mode de réalisation, vu de face, les dents des première et deuxième électrodes sont séparées deux à deux par une bande de ladite couche.

Selon un mode de réalisation, l'écran comporte en outre, du côté d'une deuxième face de ladite couche opposée à la première face, des troisième et quatrième électrodes en forme de peignes imbriqués, les dents de peigne de la troisième électrode étant situées en regard des dents de peigne de la première électrode, et les dents de peigne de la quatrième électrode étant situées en regard des dents de peigne de la deuxième électrode.

Selon un mode de réalisation, les électrodes sont transparentes.

Selon un mode de réalisation, le diffuseur présente un angle de diffusion inférieur ou égal à 30 degrés.

Selon un mode de réalisation, la distance séparant deux premières bandes conductrices parallèles voisines est d'au moins dix fois la plus grande longueur d'onde émise par la source.

Selon un mode de réalisation, la source est adaptée à émettre dans une gamme de longueurs d'ondes comprise dans la plage allant de 100 à 1500 nm.

Un autre mode de réalisation prévoit un procédé de commande d'un dispositif du type susmentionné, comprenant l'application d'une tension non nulle entre les premières et deuxièmes bandes conductrices, adaptée à générer dans ladite couche, entre deux bandes voisines, un gradient d'indice de réfraction parallèle au plan moyen de ladite couche et orthogonal auxdites bandes.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en coupe schématique d'un exemple d'un dispositif d'affichage en rétroprojection ;
la figure 2 est une vue en coupe schématique d'un exemple d'un écran d'affichage en rétroprojection ;

les figures 3A à 3C représentent schématiquement un autre exemple d'un écran d'affichage en rétroprojection ;

la figure 4 est un schéma illustrant le comportement réfractif d'une couche de cristal liquide présentant un gradient d'indice transversal ;

la figure 5 est une vue en coupe illustrant schématiquement le principe de fonctionnement d'un mode de réalisation d'un écran d'affichage en rétroprojection ; et

les figures 6A à 6C représentent schématiquement un exemple d'un mode de réalisation d'un écran d'affichage en rétroprojection.

Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", et "de l'ordre de", signifient "à 20% près", et des références directionnelles telles que "latéral", "en dessous", "au-dessus", "supérieur", "inférieur", "surmontant", etc., s'appliquent à des dispositifs orientés de la façon illustrée dans les vues correspondantes, étant entendu que, dans la pratique, ces dispositifs peuvent être orientés différemment.

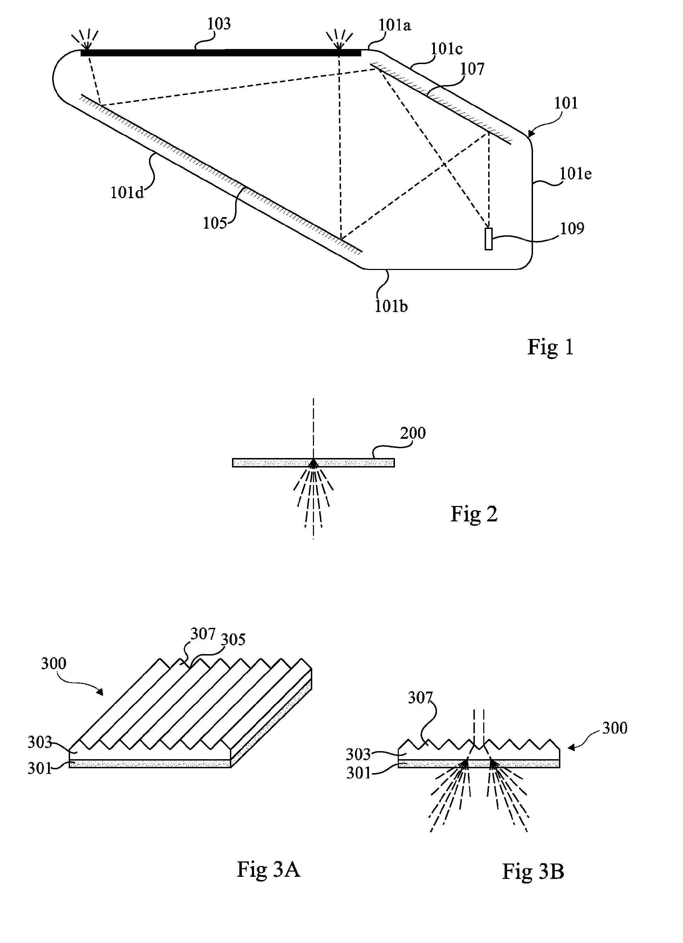

La figure 1 est une vue en coupe schématique d'un exemple (non limitatif) d'un dispositif d'affichage en rétroprojection susceptible d'être intégré dans un habitacle de véhicule, par exemple au niveau de la console centrale d'un véhicule automobile.

Le dispositif de la figure 1 comprend un boîtier 101 délimitant une enceinte dans laquelle sont intégrés des éléments de projection du dispositif. Dans cet exemple, le boîtier 101 à la forme générale d'un parallélépipède tronqué selon un plan parallèle à l'une de ses arêtes. Sur la figure 1, cinq parois 101a, 101b, 101c, 101d et 101e du boîtier 101 sont visibles. La paroi 101a correspond à une première face du parallélépipède, la paroi 101b correspond à une deuxième face tronquée du parallélépipède, parallèle à la paroi 101a, la paroi 101c correspond à une troisième face tronquée du parallélépipède, formant un angle obtus avec la paroi 101a, et la paroi 101d correspond à une quatrième face du parallélépipède, parallèle à la paroi 101c, formant un angle aigu avec la paroi 101a. La paroi 101e relie la paroi 101b à la paroi 101c dans le plan de troncature du parallélépipède, et forme, dans cet exemple un angle approximativement droit avec la paroi 101b.

Le boîtier 101 comprend une ouverture de sortie dans la paroi 101a, dans laquelle est positionné un écran 103 d'affichage en rétroprojection. La face arrière de l'écran 103, destinée à recevoir une image projetée par une source lumineuse, est tournée vers l'intérieur du boîtier 101, alors que sa face avant, destinée à être visualisée par un utilisateur, est dirigée vers l'extérieur du boîtier.

A l'intérieur du boîtier, sont disposés deux miroirs plans réfléchissants 105 et 107, positionnés respectivement le long de la paroi 101d et le long de la paroi 101c, et une source lumineuse 109, par exemple une source laser mobile à balayage, un vidéoprojecteur à LED miniaturisé, etc., positionnée approximativement à l'angle entre les parois 101b et 101e. La source 109 est positionnée de façon à éclairer le miroir 107, de sorte que le faisceau réfléchi par le miroir 107 atteigne le miroir 105 et que le faisceau réfléchi par le miroir 105 éclaire la face arrière de l'écran 103.

La figure 2 est une vue en coupe représentant schématiquement un exemple d'un écran 200 d'affichage en rétroprojection. L'écran 200 est essentiellement constitué d'un diffuseur transmissif, c'est-à-dire d'une feuille, plaque ou film transmettant, vers sa face avant, la lumière éclairant sa face arrière, en diffusant plus ou moins fortement cette lumière. Généralement, le cône de sortie du diffuseur est centré sur la direction de propagation de la lumière éclairant sa face arrière, c'est-à-dire que lorsque le diffuseur reçoit, du côté de sa face arrière, un faisceau lumineux sous incidence normale, l'intensité du faisceau émis par le diffuseur du côté de sa face avant est maximale dans un axe normal à l'écran, et décroît au fur et à mesure que l'angle de propagation de la lumière diffusée s'écarte de la normale à l'écran.

Dans un dispositif d'affichage en rétroprojection intégré au niveau de la console centrale d'un habitacle de véhicule, un problème qui se pose est que l'image doit pouvoir être visualisée sous un angle différent de la normale à l'écran, par exemple par le conducteur ou à la fois par le conducteur et un passager avant. Lorsqu'un écran du type décrit en relation avec la figure 2 est utilisé, il convient, pour que l'image perçue par le conducteur et/ou le passager avant soit suffisamment lumineuse, de prévoir une source lumineuse relativement puissante, et un écran diffuseur dont le cône de sortie présente une ouverture angulaire (ou angle de diffusion) relativement large, par exemple supérieure ou égale à 50°. Ceci entraîne une consommation électrique importante. De plus, des réflexions parasites susceptibles de gêner le conducteur peuvent se produire.

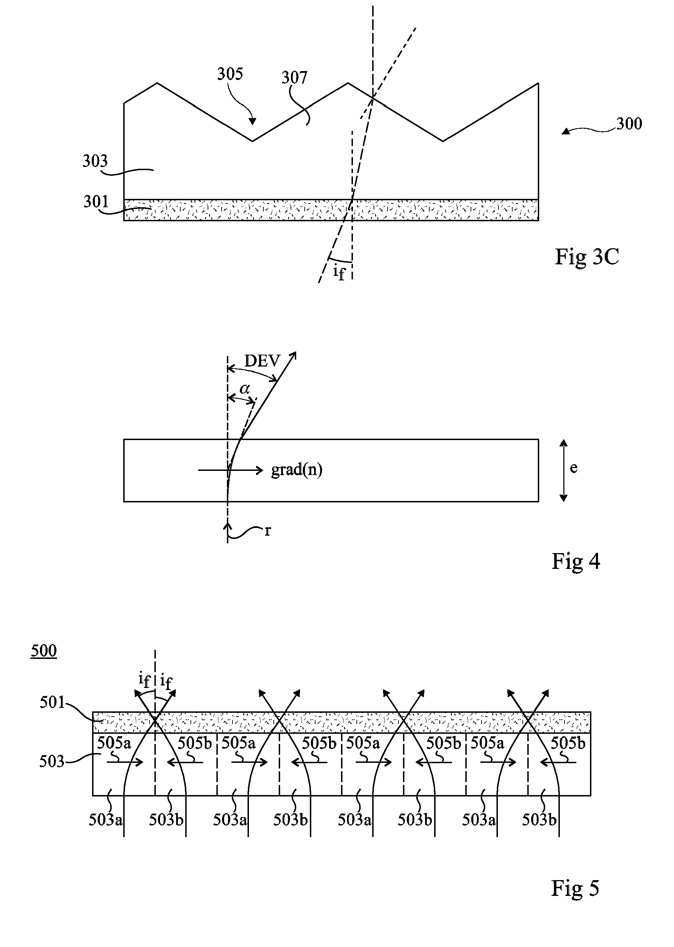

Les figures 3A à 3C représentent schématiquement un autre exemple d'un écran d'affichage en rétroprojection 300. La figure 3A est une vue en perspective de l'écran 300, la figure 3B est une vue en coupe de l'écran 300, et la figure 3C est une vue en coupe partielle agrandie de l'écran 300. L'écran 300 comprend un diffuseur transmissif 301 du type décrit en relation avec la figure 2. L'écran 300 comprend en outre, accolée à la face arrière du diffuseur 301, un film transparent 303 dont la face opposée au diffuseur 301 (c'est-à-dire la face tournée vers la source lumineuse ou face arrière) comporte des stries 305 à section triangulaire définissant des prismes 307. Dans l'exemple représenté, les stries 305 sont parallèles et s'étendent sur toute la largeur de l'écran 300, à pas constant. Dans cet exemple, les prismes 307 définis entre les parois latérales des stries 305 sont tous sensiblement identiques et ont, en section, la forme de triangles isocèles. Dans cet exemple, les bases des prismes 307 (bases des triangles isocèles) définissent une surface plane continue, parallèle au diffuseur 301 et de dimensions sensiblement identiques à celles du diffuseur 301.

Lorsqu'une image est projetée sur la face arrière de l'écran 300, si le pas des prismes est suffisamment petit par rapport à la résolution de l'image, pour chacun des pixels de l'image, une partie de la lumière correspondant au pixel est déviée d'un angle $i_f$ vers la gauche (dans l'orientation des figures 3B et 3C), et la partie restante est déviée d'un angle $i_f$ vers la droite (dans l'orientation des figures 3B et 3C). En sortie du diffuseur 301, la lumière correspondant à un pixel donné de l'image est donc répartie dans deux cônes de diffusion centrés sur des axes distincts non orthogonaux à l'écran. On notera que dans un dispositif d'affichage en rétroprojection utilisant un tel écran, un système optique (non représenté) permettant de contrôler l'angle d'incidence de la lumière projetée sur l'écran, par exemple une lentille de Fresnel, peut être prévu entre les éléments de projection et la face arrière de l'écran.

L'utilisation d'un écran à prismes du type décrit en relation avec les figures 3A à 3C dans un dispositif d'affichage en rétroprojection intégré au niveau de la console centrale d'un habitacle de véhicule, permet de rendre l'image projetée sur l'écran visible aussi bien par le conducteur que par le passager, avec un rendement entre la puissance émise par la source lumineuse et la luminosité perçue par l'utilisateur amélioré par rapport aux dispositifs utilisant un écran du type décrit en relation avec la figure 2. Un avantage est que la puissance lumineuse totale émise en sortie du diffuseur peut être diminuée. En outre, l'angle de diffusion du diffuseur 301 peut être réduit par rapport à un écran du type décrit en relation avec la figure 2. A titre d'exemple, l'angle de diffusion du diffuseur 301 peut être choisi inférieur ou égal à 30°. Ceci permet de limiter les risques de réflexions parasites susceptibles de gêner le conducteur.

Toutefois, un problème qui se pose est que, dans un tel dispositif d'affichage en rétroprojection, la répartition du flux de lumière projeté est déterminée par la géométrie des prismes et ne peut pas être modifiée.

Il serait souhaitable de pouvoir disposer d'un dispositif d'affichage en rétroprojection dans lequel le ou les angles privilégiés de projection des images peuvent être modifiés par commande. Ceci permettrait par exemple de pouvoir adapter le mode de projection en fonction du nombre d'occupants du véhicule et de leurs positions dans le véhicule.

Selon un aspect d'un mode de réalisation, on prévoit un écran d'affichage en rétroprojection comportant une couche de cristaux liquides fonctionnant en transmission, pourvue d'électrodes disposées de façon à permettre d'appliquer, dans des bandes parallèles à la largeur de l'écran de la couche de cristaux liquides, des gradients d'indice de réfraction approximativement parallèles au plan moyen de la couche et orthogonaux à la largeur de l'écran. Comme cela sera expliqué plus en détail ci-après, de tels gradients d'indice provoquent une déviation, dans la direction des gradients, de la lumière traversant la couche de cristaux liquides. En jouant sur les tensions appliquées sur les électrodes, on peut contrôler les gradients d'indice, et ainsi contrôler le ou les angles de déviation de la lumière par la couche de cristaux liquides.

On rappelle d'abord le comportement de la lumière traversant un milieu présentant un gradient d'indice de réfraction. Lorsque le milieu traversé présente un gradient d'indice uniquement dans une direction parallèle à la direction de propagation de la lumière, la direction de propagation de la lumière n'est pas modifiée. En revanche, lorsque le gradient d'indice présente une composante transversale, c'est-à-dire perpendiculaire à la direction de propagation de la lumière, la direction de propagation de la lumière tend à être modifiée, s'incurvant vers la région d'indice plus élevé. Le rayon de courbure R de la trajectoire en un point donné est proportionnel à l'indice de réfraction n en ce point et inversement proportionnel à la composante transversale du gradient d'indice en ce point, ce qui peut s'exprimer par la formule suivante :

$$\frac{1}{R} = \frac{1}{n}\vec{e_n}.\overrightarrow{grad}(n)$$

$\vec{e_n}$ et $\overrightarrow{grad}(n)$ étant respectivement le vecteur unitaire perpendiculaire à la direction de propagation au point considéré et le vecteur de gradient d'indice au point considéré, et le produit scalaire $\vec{e_n}.\overrightarrow{grad}(n)$ correspondant à la composante transversale du gradient d'indice au point considéré.

Il en résulte que lorsqu'un rayon lumineux traverse, dans le sens de l'épaisseur, une couche de cristaux liquides dont l'indice varie parallèlement au plan moyen de la couche, ce rayon est dévié d'autant plus que le gradient d'indice est important. Par ailleurs, cette déviation est une courbure progressive du trajet de la lumière, de sorte que l'angle $\alpha$ entre la direction de propagation à l'entrée de la couche de cristaux liquides et la direction de propagation à la sortie de la couche de cristaux liquides dépend de l'épaisseur e de la couche traversée.

La figure 4 représente schématiquement la déviation d'un rayon lumineux r orthogonal à la couche de cristaux liquides, engendrée par l'existence d'un gradient d'indice grad(n) dans le plan moyen de la couche de cristaux liquides. Sur la figure 4, les distances et les angles sont exagérés pour mieux illustrer le phénomène. A la sortie de la couche de cristaux liquides, une déviation supplémentaire est produite en raison du changement d'indice lorsqu'on passe à l'extérieur du cristal liquide.

La déviation totale entre le rayon d'entrée (perpendiculaire à la couche) et le rayon de sortie est indiquée par l'angle DEV. En simplifiant les calculs, on peut considérer que l'angle $\alpha$ est approximativement égal à (e/n)*grad(n), et que l'angle DEV est approximativement égal à e*grad(n). L'indice qui est considéré ici est l'indice moyen sur l'épaisseur de la couche de cristaux liquides, car l'indice n'est pas nécessairement constant sur toute l'épaisseur de la couche, notamment du fait des ancrages des cristaux liquides dans une direction d'alignement particulière au niveau des faces avant et arrière de la couche de cristaux liquides.

La figure 5 est une vue en coupe illustrant schématiquement le principe de fonctionnement d'un mode de réalisation d'un écran d'affichage en rétroprojection 500 comportant une couche de cristaux liquides dans laquelle on applique des gradients d'indice transversaux pour contrôler le ou les angles privilégiés de déviation de la lumière.

L'écran 500 présente par exemple une forme générale rectangulaire. L'écran 500 comprend un diffuseur transmissif 501, par exemple du type décrit en relation avec la figure 2. Le diffuseur 501 présente de préférence un angle de diffusion relativement faible, par exemple inférieur ou égal à 30° et de préférence inférieur ou égal à 20°.

L'écran 500 comprend en outre, du côté de la face arrière du diffuseur 501, une couche de cristaux liquides 503 parallèle au diffuseur 501, s'étendant sur approximativement toute la surface de l'écran. Dans cet exemple, la couche 503 comprend une alternance de régions 503a et 503b en forme de bandes parallèles à la largeur de l'écran, de longueur sensiblement égale à la largeur de l'écran, régulièrement réparties sur toute la longueur de l'écran. Dans l'exemple représenté, on considère que les bandes 503a et 503b ont sensiblement les mêmes dimensions, et sont juxtaposées, occupant ainsi toute la surface de la couche 503. La couche 503 est pourvue, sur sa face avant et/ou sur sa face arrière, d'électrodes, non représentées, permettant d'appliquer, dans chaque bande 503a, un même gradient d'indice transversal (c'est-à-dire parallèle au plan moyen de la couche 503) 505a, et, dans chaque bande 503b, un même gradient d'indice transversal 505b de sens opposé au gradient 505a. Dans cet exemple, les gradients 505a et 505b sont perpendiculaires à la longueur des bandes 503a et 503b (c'est-à-dire perpendiculaires à la largeur de l'écran). Dans l'exemple représenté, le gradient 505a est orienté de gauche à droite, c'est-à-dire que, dans les bandes 503a, l'indice de réfraction croît lorsqu'on se déplace de la gauche vers la droite de l'écran (dans l'orientation de la figure 5), et le gradient 505b est orienté de droite à gauche, c'est-à-dire que, dans les bandes 503b, l'indice de réfraction croît lorsqu'on se déplace de la droite vers la gauche de l'écran (dans l'orientation de la figure 5). Dans l'exemple représenté, en valeur absolue, les gradients d'indice 505a et 505b ont approximativement la même valeur.

Lorsqu'une image est projetée sur la face arrière de l'écran 500, si le pas des bandes 503a et 503b est suffisamment petit par rapport à la résolution de l'image, pour chacun des pixels de l'image, une partie de la lumière correspondant au pixel traverse une bande 503a, et est par conséquent déviée d'un angle $i_f$ vers la droite (dans l'orientation de la figure 5), et une autre partie de la lumière correspondant au pixel traverse une bande 503b voisine, et est par conséquent déviée d'un angle $i_f$ vers la gauche (dans l'orientation de la figure 5). En sortie du diffuseur 501, la lumière correspondant à un pixel donné de l'image est donc répartie dans deux cônes de diffusion centrés sur des axes distincts non orthogonaux à l'écran. On notera que dans un dispositif d'affichage en rétroprojection utilisant un tel écran, un système optique (non représenté) permettant de contrôler l'angle d'incidence, sur l'écran 500, des rayons lumineux projetés par la source (non représentée), par exemple une lentille de Fresnel, peut être prévu entre les éléments de projection et la face arrière de l'écran. De préférence, le système optique est tel que tous les rayons lumineux projetés par la source arrivent sur la face arrière de la couche 503 sous une incidence approximativement normale.

La couche de cristaux liquides 503 de l'écran 500 réalise ainsi une fonction de déviation et de séparation du flux lumineux similaire ou identique à celle réalisée par le film de microprismes 303 de l'écran 300 des figures 3A à 3C. Plus particulièrement, dans l'exemple de la figure 5, chaque paire de bandes voisines 503a, 503b réalise une fonction similaire à celle d'un prisme 307 de l'écran 300 des figures 3A à 3C.

L'écran 500 présente sensiblement les mêmes avantages que l'écran 300 des figures 3A à 3C, et a comme avantage supplémentaire que son ou ses angles privilégiés de projection des images ne sont pas figés, et peuvent être modifiés en commandant de façon appropriée la couche de cristaux liquides 503. A titre d'exemple, en augmentant ou en diminuant les valeurs des gradients d'indice 505a et 505b, il est possible d'augmenter ou de diminuer les angles des déviations provoquées par les bandes 503a et 503b de la couche 503. De plus, en annulant les gradients d'indice 505a et 505b, le flux lumineux de projection des images peut être orienté vers l'intérieur du véhicule.

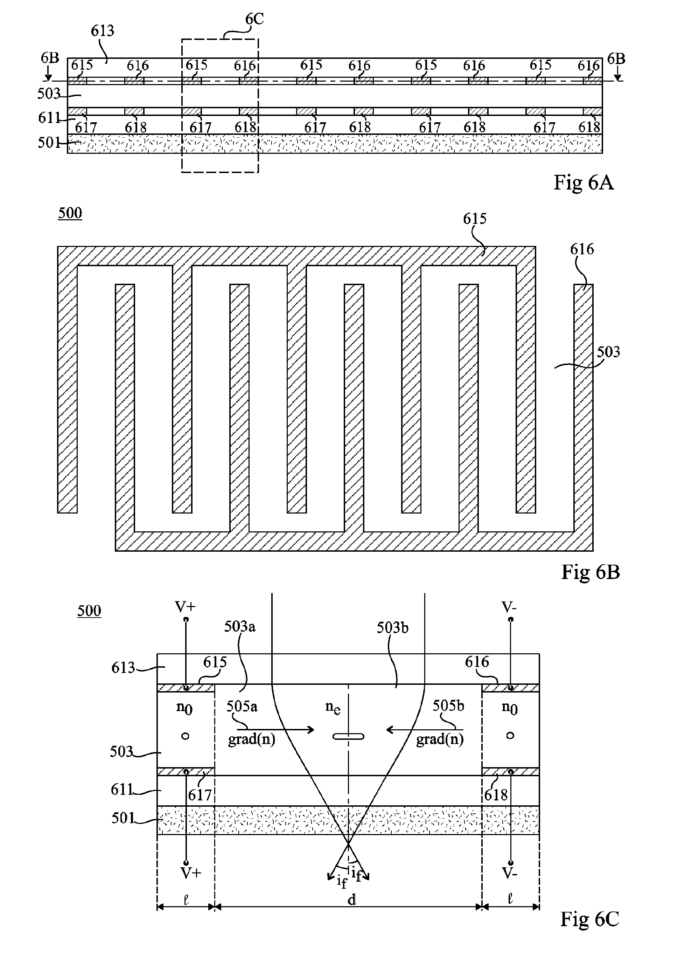

Les figures 6A à 6C illustrent de façon plus détaillée un exemple de réalisation de l'écran 500 de la figure 5. Plus particulièrement, la figure 6A représente une vue en coupe dans le sens de la longueur de l'écran 500, la figure 6B représente une vue en coupe de l'écran 500 selon le plan 6B de la figure 6A, et la figure 6C représente un agrandissement d'une portion 6C de la figure 6A.

Comme indiqué ci-dessus, l'écran 500 comprend un diffuseur transmissif 501. A titre d'exemple, le diffuseur 501 peut être un diffuseur lenticulaire cylindrique du type décrit dans l'article "A dual-directional light-control film with a high-sag and high-asymmetrical-shape microlens array fabricated by a UV imprinting process" de Ta-Wei Lin et al. D'autres types de diffuseurs peuvent toutefois être utilisés, par exemple un diffuseur du type commercialisé par la société LUMINIT sous la dénomination "Light Shaping Diffuser", un diffuseur holographique, etc.

Dans cet exemple, l'écran 500 comprend, revêtant la face arrière du diffuseur 501, un assemblage comportant deux plaques transparentes (par exemple en verre) parallèles 611 et 613, définissant une cavité hermétiquement close dans laquelle se trouve la couche de cristaux liquides 503. Dans l'exemple représenté, la plaque 611 est située du côté de la face avant de la couche 503, et la plaque 613 est située du côté de la face arrière de la couche 503. Une mince couche de colle, non représentée, peut être prévue entre la face arrière du diffuseur 501 et la face avant de la couche 611.

Dans cet exemple, la plaque 613 porte, du côté de sa face avant, une électrode 615 et une électrode 616 comportant chacune une pluralité de bandes approximativement parallèles à la largeur de l'écran et de longueur approximativement égale à la largeur de l'écran. Les bandes des électrodes 615 et 616 sont alternées et régulièrement réparties sur toute la longueur de l'écran. Comme l'illustre la figure 6B, les électrodes 615 et 616 ont, vu de face, la forme de peignes imbriqués, les bandes parallèles à la largeur de l'écran des électrodes 615 et 616 correspondant aux dents des peignes. De plus, dans cet exemple, la plaque 611 porte, du côté de sa face arrière, une électrode 617 et une électrode 618 comportant chacune une pluralité de bandes approximativement parallèles à la largeur de l'écran et de longueur approximativement égale à la largeur de l'écran, les bandes des électrodes 617 et 618 étant alternées et régulièrement réparties sur toute la longueur de l'écran. Dans cet exemple, les électrodes 615 et 617 d'une part, et 616 et 618 d'autre part, ont approximativement la même forme et sont situées en regard, c'est-à-dire que, en projection perpendiculairement à l'écran, les électrodes 615 et 617 coïncident approximativement et les électrodes 616 et 618 coïncident approximativement. Les électrodes 615, 616, 617 et 618 sont de préférence réalisées en un matériau conducteur transparent, par exemple en oxyde d'indium-étain (ITO).

La figure 6C illustre un exemple de fonctionnement de l'écran 500. On considère à titre d'exemple (non limitatif) qu'en l'absence de polarisation, les cristaux liquides sont alignés parallèlement aux dents des électrodes en peigne 615, 616, 617 et 618. Pour obtenir cet alignement, des couches en un polymère d'alignement (non représentées) peuvent revêtir respectivement la face avant et la face arrière de la couche de cristaux liquides 503. Plus généralement, tout autre élément d'alignement de cristaux liquides peut être prévu.

Dans cet exemple, un même potentiel V+ est appliqué sur les électrodes 615 et 617, et un même potentiel V-, inférieur au potentiel V+, est appliqué sur les électrodes 616 et 618.

Les portions de la couche 503 situées entre deux bandes en regard des électrodes 615 et 617 sont soumises à une tension nulle perpendiculairement à la couche 503, et présentent en conséquence un indice de réfraction minimal $n_O$ qui correspond à l'indice ordinaire de la couche de cristaux liquides. De même, les portions de la couche 503 situées entre deux bandes en regard des électrodes 616 et 618 sont soumises à une tension nulle perpendiculairement à la couche 503, et ont donc un indice de réfraction approximativement égal à $n_O$.

En revanche, chaque portion de la couche 503 située, vu de dessus, entre deux bandes voisines des électrodes 615 et 616 (ou, vu de dessous, entre deux bandes voisines des électrodes 617 et 618) est soumise, parallèlement au plan moyen de la couche 503 et perpendiculairement à la largeur de l'écran, à une tension V+ - V- non nulle. Ainsi, chaque portion de la couche 503 située, vu de dessus, entre deux bandes voisines des électrodes 615 et 616, comprend deux zones 503a et 503b présentant des gradients d'indice 505a et 505b opposés parallèlement au plan moyen de la couche 503 et perpendiculairement à la largeur de l'écran. Dans cet exemple, l'indice de réfraction maximal est obtenu dans une zone centrale de jonction entre les zones 503a et 503b. Dans cette zone centrale, la couche 503 présente un indice ne supérieur à $n_O$. Si la tension V+ - V- est suffisamment élevée, les cristaux liquides dans la zone centrale de jonction sont alignés parallèlement au plan moyen de la couche 503 et perpendiculairement aux dents des électrodes en peigne, l'indice ne correspondant alors à l'indice extraordinaire de la couche de cristaux liquides.

La valeur du gradient dans les zones 503a et 503b dépend de la distance d entre les bandes voisines des électrodes 615 et 616, le gradient maximal qui peut être atteint étant égal à $2*(ne - n_O)/d$, où $n_O$ et ne désignent respectivement l'indice ordinaire et l'indice extraordinaire de la couche 503.

Les portions de la couche 503 situées entre deux bandes en regard des électrodes 615 et 617 ou entre deux bandes en regard des électrodes 616 et 618 ne présentent pas de gradient transversal d'indice, et ne dévient donc pas la lumière qui les traverse. Si on désigne par 1 la largeur des dents des électrodes 615, 616, 617 et 618, la proportion du flux lumineux non déviée par la couche de cristaux liquides est approximativement égale à $100*l/(l+d)$ (en pourcents). La portion restante $(100*d(l+d)\%)$ sera déviée pour moitié vers la gauche et pour moitié vers la droite (dans l'orientation de la figure 6C), d'un angle $i_f$ approximativement égal $e*2*(n_e - n_O)/d$ radians, où e désigne l'épaisseur de la couche 503.

Diverses variantes de procédé de commande peuvent être prévues pour obtenir des répartitions différentes du flux lumineux projeté. A titre d'exemple, pour obtenir une répartition asymétrique du flux lumineux, on peut prévoir d'appliquer un potentiel V+ sur l'électrode 617, un potentiel V- inférieur au potentiel V+ sur l'électrode 615, un potentiel v+ supérieur au potentiel V- et inférieur au potentiel V+ sur l'électrode 616, et un potentiel v- inférieur au potentiel v+ sur l'électrode 618, les potentiels V+, V-, v+ et v- étant tels que la tension V+ - V entre les électrodes 617 et 615 soit supérieure à la tension v+ - v- entre les électrodes 616 et 618, et que la tension v+ - V entre les électrodes 616 et 615 soit égale à la tension V+ - ventre les électrodes 617 et 618.

Plus généralement, en fonction de la répartition souhaitée du flux lumineux, divers paramètres peuvent être ajustés tels que les potentiels appliqués sur les électrodes, la largeur des dents des électrodes en peigne, l'espacement entre les dents des électrodes en peigne, l'épaisseur de la couche de cristaux liquides, et le type d'alignement des cristaux liquides.

On notera que dans les modes de réalisation décrits dans la présente demande de brevet, la déviation de la lumière réalisée par la couche de cristaux liquides est une déviation par réfraction, et non une déviation diffractive du type généralement prévu dans les systèmes optiques à base de réseaux diffractifs à cristaux liquides, par exemple des réseaux du type décrit dans l'article intitulé "High-spatial-frequency Liquid Crystal Phase Gratings with Double-sided Striped Electrodes" de Lanlan Gu et al. (SPIE Vol.5741). Pour obtenir une déviation de type réfractif, permettant notamment de séparer le faisceau incident en deux faisceaux de directions de propagations distinctes, le pas des électrodes, c'est-à-dire la distance d entre deux dents voisines d'une même électrode en peigne, est de préférence supérieur à plusieurs fois la longueur d'onde de la lumière émise par la source lumineuse (ou la plus grande longueur d'onde émise par la source lumineuse dans le cas d'une source émettant à plusieurs longueurs d'ondes). Dans un mode de réalisation préféré, le pas des électrodes est d'au moins dix fois la plus grande longueur d'onde émise par la source lumineuse. A titre d'exemple non limitatif, la source lumineuse émet dans une gamme de longueurs d'ondes visibles ou proches du visible, par exemple dans une gamme de longueurs d'ondes comprise dans la plage allant de 100 à 1500 nm.

A titre d'exemple non limitatif, l'épaisseur de la couche de cristaux liquides est comprise entre 5 et 25 μm, la largeur des électrodes en peigne est comprise entre 1 et 10 μm, et la distance d entre deux dents voisines des électrodes en peigne est comprise entre 10 et 50 μm.

La fabrication de l'écran 500 présente l'avantage d'être relativement simple dans la mesure où elle peut être mise en oeuvre par des étapes classiques de fabrication de dispositifs à cristaux liquides.

Des modes de réalisation particuliers ont été décrits. Diverses variantes et modifications apparaîtront à l'homme de l'art.

En particulier, bien que l'on ait décrit ci-dessus des exemples de réalisation dans lesquels la couche de cristaux liquides 503 est pourvue d'électrodes du côté de sa face avant et du côté de sa face arrière, l'homme de l'art saura obtenir le fonctionnement recherché en prévoyant des électrodes uniquement du côté de la face avant de la couche 503 ou uniquement du côté de sa face arrière.

De plus, les modes de réalisation décrits ci-dessus sont compatibles non seulement avec des écrans plans, mais aussi avec des écrans de formes courbes.

De plus, en partant des modes de réalisation décrits ci-dessus, l'homme de l'art pourra, sans faire preuve d'activité inventive, ajouter à l'empilement de l'écran, des couches, feuilles, films ou plaques supplémentaires, pour mettre en oeuvre d'autres fonctions, par exemple une ou plusieurs couches antireflets.

## Revendications

1. Dispositif d'affichage en rétroprojection, comprenant un écran (500) et une source lumineuse, dans lequel l'écran (500) comporte :

    un diffuseur transmissif (501) ;
    une couche (503) de cristaux liquides disposée du côté de la face arrière du diffuseur (501) ; et du côté d'une première face de ladite couche (503), des premières et deuxièmes bandes conductrices parallèles alternées régulièrement réparties sur toute la surface de l'écran, les premières bandes étant interconnectées, et les deuxièmes bandes étant interconnectées et non connectées aux premières bandes,
    et dans lequel la source lumineuse est adaptée à projeter une image sur l'arrière de l'écran (500).

2. Dispositif selon la revendication 1, dans lequel les premières bandes conductrices et les deuxièmes bandes conductrices forment respectivement les dents de première (615) et deuxième (616) électrodes en forme de peignes imbriqués.

3. Dispositif selon la revendication 2, dans lequel les dents des première (615) et deuxième (616) électrodes sont parallèles à la largeur de l'écran (500), et ont une longueur approximativement égale à la largeur de l'écran (500).

4. Dispositif selon la revendication 3, dans lequel les dents des première (615) et deuxième (616) électrodes sont régulièrement réparties sur toute la longueur de l'écran (500).

5. Dispositif selon l'une quelconque des revendications 2 à 4, dans lequel, vu de face, les dents des première (615) et deuxième (616) électrodes sont séparées deux à deux par une bande de ladite couche (503).

6. Dispositif selon l'une quelconque des revendications 2 à 5, dans lequel l'écran (500) comporte en outre, du côté d'une deuxième face de ladite couche (503) opposée à la première face, des troisième (617) et quatrième (618) électrodes en forme de peignes imbriqués, les dents de peigne de la troisième électrode (617) étant situées en regard des dents de peigne de la première électrode (615), et les dents de peigne de la quatrième électrode (618) étant situées en regard des dents de peigne de la deuxième électrode (616).

7. Dispositif selon l'une quelconque des revendications 1 à 6, dans lequel lesdites électrodes (615, 616, 617, 618) sont transparentes.

8. Dispositif selon l'une quelconque des revendications 1 à 7, dans lequel le diffuseur (501) présente un angle de diffusion inférieur ou égal à 30 degrés.

9. Dispositif selon l'une quelconque des revendications 1 à 8, dans lequel la distance séparant deux premières bandes conductrices parallèles voisines est d'au moins dix fois la plus grande longueur d'onde émise par la source.

10. Dispositif selon l'une quelconque des revendications 1 à 9, dans lequel la source est adaptée à émettre dans une gamme de longueurs d'ondes comprise dans la plage allant de 100 à 1500 nm.

11. Procédé de commande d'un dispositif selon l'une quelconque des revendications 1 à 10, comprenant l'application d'une tension non nulle entre les premières et deuxièmes bandes conductrices, adaptée à générer dans ladite couche (503), entre deux bandes voisines, un gradient d'indice de réfraction parallèle au plan moyen de ladite couche (503) et orthogonal auxdites bandes.

Fig 1

Fig 2

Fig 3A

Fig 3B

305    307

303

301

$i_f$

**Fig 3C**

300

DEV

$\alpha$

grad(n)

e

r

**Fig 4**

500

501

$i_f$ | $i_f$

503

505a | 505b | 505a | 505b | 505a | 505b | 505a | 505b

503a | 503b | 503a | 503b | 503a | 503b | 503a | 503b

**Fig 5**

Fig 6A

Fig 6B

Fig 6C

Europäisches
Patentamt

European
Patent Office

Office européen
des brevets

# RAPPORT DE RECHERCHE EUROPEENNE

Numéro de la demande

EP 15 17 9415

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 886 762 A (LEE SEUNG-HEE [KR] ET AL) 23 mars 1999 (1999-03-23) * colonne 7, ligne 30 - colonne 8, ligne 42; figures 4-5 * ----- | 1-11 | INV. G03B21/00 |
| X | US 6 839 117 B1 (PARK HAN JUN [TW] ET AL) 4 janvier 2005 (2005-01-04) * colonne 3, ligne 4 - colonne 5, ligne 13; figures 3A-5B * ----- | 1-11 | |
| X | US 2008/204612 A1 (KOMITOV LACHEZAR [SE]) 28 août 2008 (2008-08-28) * alinéa [0033] - alinéa [0046]; figures 1-2 * ----- | 1-11 | |
| X | US 2011/134349 A1 (WU JHIH-SIAN [TW] ET AL) 9 juin 2011 (2011-06-09) * alinéa [0020] - alinéa [0025]; figures 1-5 * ----- | 1-11 | |
| A | US 2014/016052 A1 (YANG KEI-HSIUNG [TW] ET AL) 16 janvier 2014 (2014-01-16) * le document en entier * ----- | 1-11 | DOMAINES TECHNIQUES RECHERCHES (IPC) G03B |
| A | WEN-CHI HUNG ET AL: "Sensitive voltage-dependent diffraction of a liquid crystal Fresnel lens", APPLIED OPTICS, OPTICAL SOCIETY OF AMERICA, WASHINGTON, DC; US, vol. 48, no. 11, 10 avril 2009 (2009-04-10), pages 2094-2098, XP001522916, ISSN: 0003-6935, DOI: 10.1364/AO.48.002094 * le document en entier * ----- | 1-11 | |

Le présent rapport a été établi pour toutes les revendications

| Lieu de la recherche | Date d'achèvement de la recherche | Examinateur |
|---|---|---|
| Munich | 15 décembre 2015 | Tomezzoli, Giancarlo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 17 9415

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-12-2015

| Document brevet cité au rapport de recherche | | Date de publication | Membre(s) de la famille de brevet(s) | | Date de publication |
|---|---|---|---|---|---|
| US 5886762 | A | 23-03-1999 | JP<br>JP<br>TW<br>US | 3114065 B2<br>H1164892 A<br>451101 B<br>5886762 A | 04-12-2000<br>05-03-1999<br>21-08-2001<br>23-03-1999 |
| US 6839117 | B1 | 04-01-2005 | TW<br>US | I243936 B<br>6839117 B1 | 21-11-2005<br>04-01-2005 |
| US 2008204612 | A1 | 28-08-2008 | AUCUN | | |
| US 2011134349 | A1 | 09-06-2011 | TW<br>US | 201120516 A<br>2011134349 A1 | 16-06-2011<br>09-06-2011 |
| US 2014016052 | A1 | 16-01-2014 | TW<br>US | 201403197 A<br>2014016052 A1 | 16-01-2014<br>16-01-2014 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LANLAN GU et al.** High-spatial-frequency Liquid Crystal Phase Gratings with Double-sided Striped Electrodes. *SPIE,* vol. 5741